Europäisches Patentamt

European Patent Office

Office européen des brevets

(11) Numéro de publication: **0 098 197**

**A1**

(12) **DEMANDE DE BREVET EUROPEEN**

(21) Numéro de dépôt: **83401225.4**

(22) Date de dépôt: **14.06.83**

(51) Int. Cl.³: **H 04 N 3/30**
**H 04 N 5/02, H 04 N 7/00**

(30) Priorité: **25.06.82 FR 8211209**

(43) Date de publication de la demande:
**11.01.84 Bulletin 84/2**

(84) Etats contractants désignés:
**AT BE CH DE GB IT LI LU NL SE**

(71) Demandeur: **THOMSON-CSF**
**173, Boulevard Haussmann**
**F-75379 Paris Cedex 08(FR)**

(72) Inventeur: **Favreau, Michel**
**THOMSON-CSF SCPI 173, bld Haussmann**
**F-75379 Paris Cedex 08(FR)**

(74) Mandataire: **Turlèque, Clotilde et al,**
**THOMSON-CSF SCPI 173, Bld Haussmann**
**F-75379 Paris Cedex 08(FR)**

(54) Système de télévision à haute définition.

㉗ L'invention concerne les dispositifs de restitution de vues des systèmes de télévision à haute définition, où le balayage vertical d'analyse d'une image est "ondulatoire", c'est-à-dire oscille de part et d'autre de chaque ligne avec une faible amplitude et une fréquence beaucoup plus élevée que la fréquence $F_L$ de balayage ligne; et où le balayage horizontal de restitution est "linéaire", mais de fréquence $2F_L$, de telle façon que chaque ligne analysée est restituée par une paire de lignes.

Un dispositif de restitution de vues comporte un dispositif (70) de changement de trames permettant de restituer les deux lignes de chaque paire, en attribuant une de ces lignes à une première trame et en attribuant l'autre à une seconde trame, les deux lignes restituées étant en outre immédiatement voisines dans l'image restituée.

Application aux systèmes de télévision à haute définition.

Fig.5

EP 0 098 197 A1

1
## Système de télévision à haute définition

La présente invention a pour objet un système de télévision à haute définition, compatible avec les récepteurs existants.

La demande de brevet français FR. 80 14352 décrit un système de télévision à haute définition comportant, à l'émission, un dispositif de prise de vues comportant : un tube analyseur fournissant un signal vidéofréquence, et un premier générateur de signaux générant les signaux de balayage 1H et V nécessaires au fonctionnement du tube analyseur, ces signaux 1H et V engendrant une analyse "ondulatoire" ayant pour fréquence ligne $F_L$ et pour fréquence d'ondulation F, et à la réception, un dispositif de restitution de vues comportant : un tube récepteur, un deuxième générateur de signaux générant des signaux de balayage 2H et V nécessaires au fonctionnement du tube récepteur, ces signaux 2H et V engendrant une restitution "linéaire" ayant pour fréquence ligne $2F_L$ , une première voie de traitement ayant une entrée couplée à l'entrée du dispositif de restitution de vues et une sortie fournissant un premier signal correspondant à la partie basse du spectre du signal d'entrée du tube récepteur, une deuxième voie de traitement ayant une entrée couplée à l'entrée du dispositif de restitution de vues et une sortie fournissant un deuxième signal correspondant à la partie haute du spectre du signal d'entrée du tube récepteur, et un mélangeur analogique ayant des première et deuxième entrées respectivement couplées à la sortie de la première voie de traitement et à la sortie de la deuxième voie de traitement et une sortie fournissant le signal d'entrée du tube récepteur.

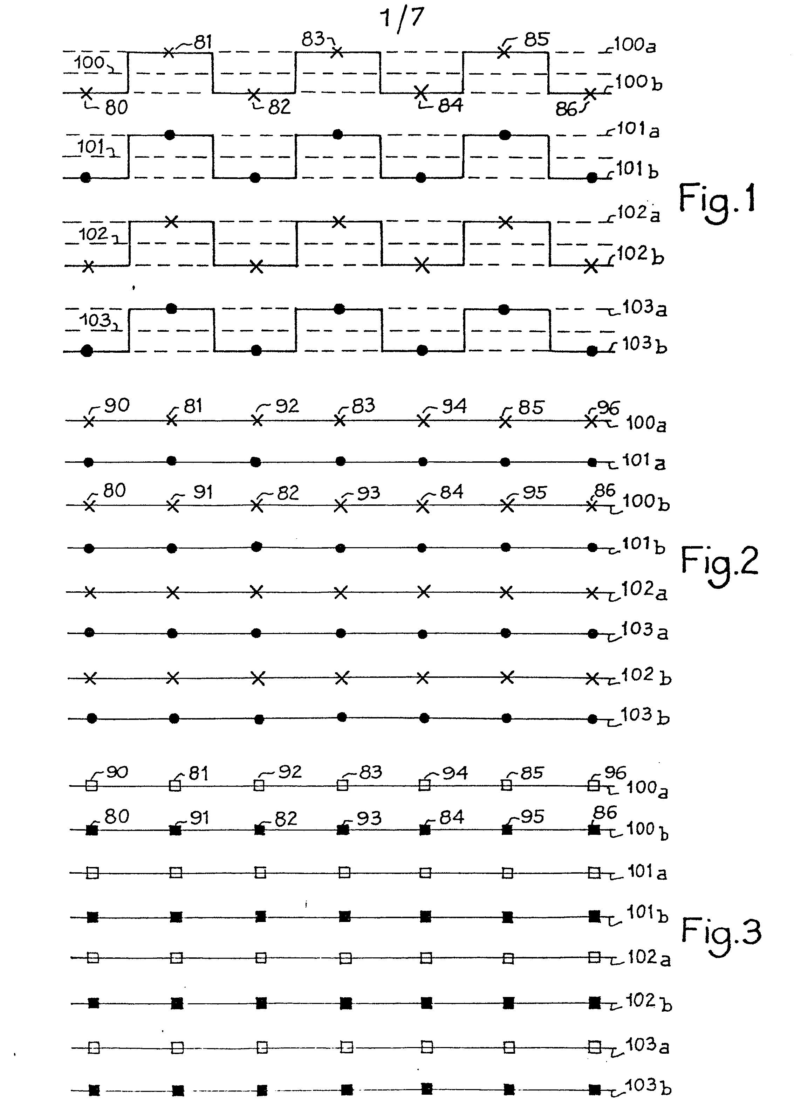

Sur la figure 1 est rappelé le principe mis en oeuvre, à la prise de vues, pour analyser quatre lignes d'image, 100, 101, 102 et 103, selon le procédé d'analyse "ondulatoire". Cette analyse est obtenue en modulant le signal de balayage vertical par un signal rectangulaire de faible amplitude et de fréquence F très supérieure à la fréquence de balayage horizontal $F_L$ . Le balayage de la ligne 100 analyse des points, 80, 81, 82, 83, 84, 85 et 86 qui sont disposés en quinconce. Le balayage "ondulatoire" des lignes 100, 101, 102 et 103 est équivalent à analyser un couple de lignes $101_a$ et

$101_b$ , un couple de lignes $102_a$ et $102_b$ , et un couple de lignes $103_a$ et $103_b$. Dans le cas où l'analyse est réalisée en deux trames les lignes 100 et 102 appartiennent, par exemple, à la première trame, et les lignes 101 et 103 appartiennent à la deuxième trame. Sur la figure 1 les points analysés pendant la première trame sont représentés par des croix, et les points analysés pendant la deuxième trame sont représentés par des points noirs. Ce procédé d'analyse permet la restitution des vues soit sur un récepteur classique, soit sur un récepteur à haute définition. Si une telle image est reproduite par un récepteur à balayage classique elle a une définition horizontale deux fois plus élevée que la définition verticale, puisque les lignes ne sont pas dédoublées par une modulation du signal de balayage vertical. Par contre la définition verticale est améliorée si l'image est reproduite par un dispositif de restitution de vues dont le signal de balayage vertical est modulé de la même façon qu'à la prise de vues. Les points reproduits sont alors disposés en quinconce, comme ceux qui ont été analysés. Un autre procédé de restitution de vues a été décrit dans le brevet mentionné ci-dessus, il consiste à restituer chaque image par un nombre de lignes double de celui de l'analyse. Par exemple, l'image est restituée en 1250 lignes alors qu'elle a été analysée en 625 lignes "ondulatoires". Dans ce cas les points de la ligne "ondulatoire" 100 sont restitués en balayant deux lignes droites $100_a$ et $100_b$ . D'autre part les points reproduits ne sont plus disposés en quinconce. Les espaces du quinconce, existant à l'analyse, sont balayés et leurs valeurs de luminance sont déduites des valeurs de luminance des points voisins appartenant au quinconce. La demande de brevet sus-dite décrit un procédé permettant de déterminer les valeurs de luminance des points de l'image restituée. La présente invention concerne des procédés de balayage pour la restitution de chaque couple de lignes.

Sur la figure 2 est représentée la restitution des lignes 100, 101, 102 et 103, par un balayage vertical linéaire classique, c'est-à-dire proportionnel au temps. Elles sont restituées respectivement par les couples de lignes à balayage "linéaire" $100_a$ et $100_b$, $101_a$ et $101_b$, $102_a$ et $102_b$, $103_a$ et $103_b$. La ligne $100_a$ comporte des points 81, 83, et 85, qui ont été effectivement analysés par le balayage "ondulatoire", mais aussi des points 90, 92, 94, et 96, qui n'ont pas été analysés mais dont la valeur de luminance peut être déduite de celle des points voisins en utilisant les propriétés de redondance des informations de luminance d'une image. La ligne $100_b$ est composée de points 80, 82, 84, et 86, effectivement analysés par le balayage "ondulatoire" et de points 91, 93, et 95, qui n'ont pas été analysés mais dont la valeur de luminance peut être déduite de la même manière. Il est à noter que les lignes $100_a$ et $100_b$ qui sont immédiatement voisines à l'analyse, sont séparées par la ligne $101_a$ à la restitution, à cause du balayage vertical de restitution qui est linéaire et qui comprend deux trames.

Le signal vidéo représentant la luminance des points analysés peut être décomposé en une partie haute fréquence et une partie basse fréquence. La partie haute fréquence du signal vidéo est engendrée par les contours verticaux des objets représentés par l'image. Elle est pratiquement identique pour deux lignes voisines. La partie basse fréquence du signal vidéo correspond à des contours horizontaux des objets représentés par l'image, elle est donc pratiquement identique pour deux points voisins situés sur une même ligne. Ces deux propriétés permettent de reconstituer une valeur de luminance pour chacun des points qui sont intercalés dans les espaces du quinconce à la restitution de l'image. Par exemple, le point 90, qui est situé au dessus du point 80 et à gauche du point 81 qui sont effectivement analysés, a une valeur de luminance qui peut être déterminée en additionnant la partie haute fréquence du signal vidéo correspondant au point 80 et la partie basse fréquence du signal vidéo correspondant au point 81. Le point 91, qui est situé à droite du point 80 et en dessous du point 81 qui sont effectivement analysés, a une valeur de luminance qui peut être déterminée en additionnant la partie haute fréquence du signal vidéo correspondant au point 81 et la partie basse fréquence du signal vidéo correspondant au point 80.

Dans l'exemple de réalisation décrit dans la demande de brevet sus-dite, l'analyse, la transmission, et la restitution des lignes 100, 101, 102, et 103, sont faites en conservant les deux trames de l'analyse, c'est-à-dire que la ligne 100, par exemple, est restituée par des lignes $100_a$ et $100_b$ appartenant à une première trame, et la ligne 101 est restituée par des lignes $101_a$ et $101_b$ appartenant à une seconde trame. Sur la figure 2, les points de la première et de la seconde trame de restitution, dans le cas d'un balayage vertical linéaire classique, sont représentés respectivement par des croix et des points noirs. Les lignes $100_a$ et $100_b$ sont séparées par la ligne $101_a$, et les lignes $101_a$ et $101_b$ sont séparées par la ligne $100_b$, ce qui provoque une diminution de la définition verticale, par rapport à une analyse classique en 1250 lignes. L'objet de cette invention est principalement de remédier à cet inconvénient.

Selon l'invention, un système de télévision à haute définition comprenant, à l'émission, un dispositif de prise de vues comportant : un tube analyseur ayant une sortie fournissant un signal vidéofréquence, et un premier générateur de signaux pour générer des signaux de balayage 1H et V nécessaires au fonctionnement du tube analyseur, ces signaux 1H et V engendrant une analyse "ondulatoire" ayant pour fréquence ligne $F_L$ et pour fréquence d'ondulation F, et à la réception, un dispositif de restitution de vue comportant : une entrée de signal, un tube récepteur recevant un signal de commande, un deuxième générateur de signaux pour générer des signaux de balayage 2H et V engendrant une restitution "linéaire" ayant pour fréquence ligne $2F_L$, chaque ligne analysée étant restituée sous la forme de deux lignes qui sont immédiatement voisines dans l'image restituée, une première voie de traitement ayant une entrée couplée à l'entrée du dispositif de restitution de vue et une sortie pour fournir un premier signal correspondant à la partie basse du spectre du signal de commande du tube récepteur, une deuxième voie de traitement ayant une entrée couplée à l'entrée du dispositif de restitution de vue et une sortie pour fournir un deuxième signal correspondant à la partie haute du spectre du signal de commande du tube récepteur, et un mélangeur ayant une première et une seconde entrée respectivement couplées à la sortie de la première voie de traitement et à la sortie de la deuxième voie de traitement, et une sortie couplée à une entrée du tube récepteur, système caractérisé en ce que le deuxième générateur de signaux génère des signaux de balayage tels que chaque image analysée est restituée en deux trames entrelacées, et tels que chaque ligne analysée est restituée sous la forme de deux lignes qui sont immédiatement voisines dans l'image restituée.

L'invention sera mieux comprise et d'autres détails apparaîtront à l'aide de la description ci-après et des figures s'y rapportant :

La figure 1 représente un portion d'image analysée selon un balayage "ondulatoire" ;

La figure 2 représente la même portion d'image restituée selon un balayage vertical linéaire et un balayage horizontal linéaire avec un dédoublement des lignes à la restitution, selon un procédé connu ;

La figure 3 représente la même portion d'image restituée par un dispositif de restitution de vues du système de télévision succinctement décrit ci-dessus ;

La figure 4 représente le graphe en fonction du temps d'un exemple de réalisation du signal de balayage vertical dans un premier exemple de réalisation du dispositif de restitution de vues ;

La figure 5 représente le balayage obtenu avec le signal représenté sur la figure 4 ;

Les figures 6 et 7 représentent un premier et un deuxième exemple de réalisation d'un dispositif de restitution de vues ;

La figure 8 représente le schéma synoptique d'un exemple de réalisation d'une partie du deuxième exemple de réalisation d'un dispositif de restitution de vues ;

La figure 9 représente le schéma synoptique d'un troisième exemple de réalisation du dispositif de restitution de vues.

Les figures 10, 11 et 12 représentent des tableaux explicitant le fonctionnement du deuxième et du troisième exemple de réalisation.

La figure 3 représente la restitution de la portion d'image de la figure 1 par un balayage horizontal de 1250 lignes et un balayage vertical n'ayant pas le défaut du balayage vertical linéaire classique. La ligne $100_b$ est immédiatement voisine de la ligne $100_a$. Il en est de même pour les couples de lignes restituées $101_a$ et $101_b$, $102_a$ et $102_b$, $103_a$ et $103_b$, etc... La définition verticale est alors de 1250 lignes.

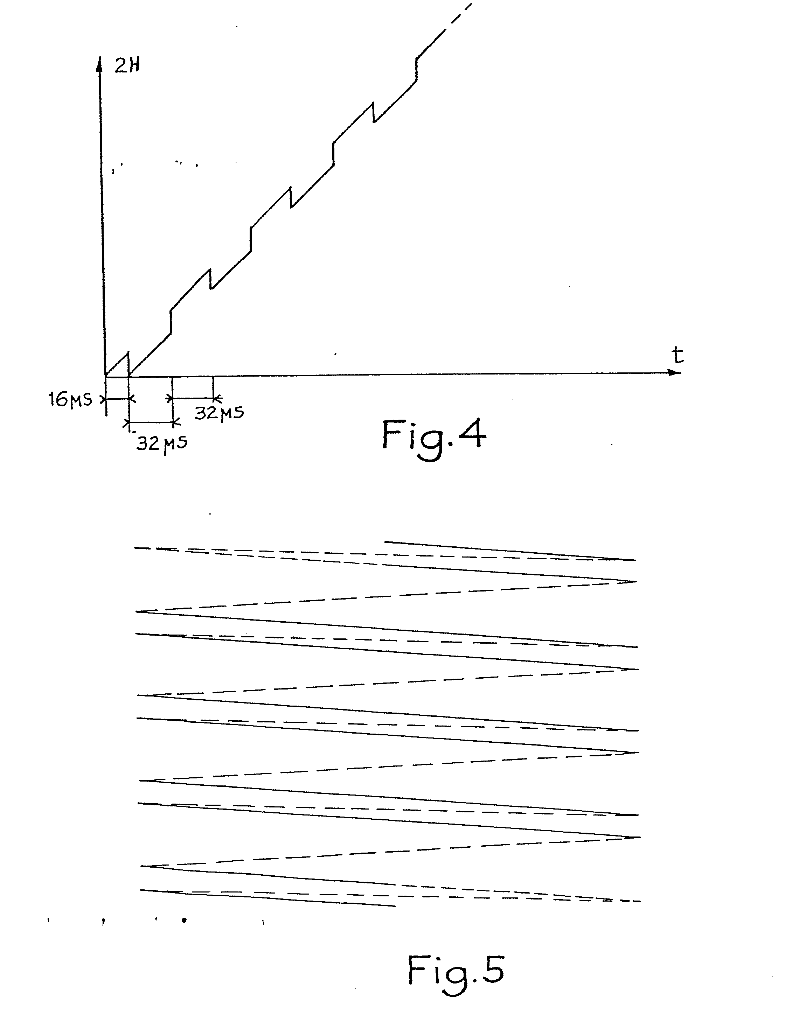

Selon une première variante du balayage vertical de restitution, les trames de restitution sont identiques aux trames d'analyse, autrement dit la ligne $100_b$ est balayée immédiatement après la ligne $100_a$. Ce balayage vertical est obtenu en utilisant, par exemple, le signal de déviation 2H dont le graphe temporel est représenté sur la figure 4. Ce signal est la somme d'un premier signal qui est une fonction linéaire du temps t, comme pour un balayage classique, et d'un second signal qui est constitué d'impulsions de durée 32 µs et de période 64 µs. Le deuxième signal a une amplitude égale à la moitié de la variation du premier signal en 32 µs. Le balayage commence par une demi-ligne, ce qui correspond à une impulsion de 16 µs au lieu de 32 µs.

La figure 5 représente le balayage obtenu avec un tel signal de déviation vertical pour une trame. Les lignes sont regroupées par deux et chaque interligne laisse un espace pour deux lignes de l'autre trame.

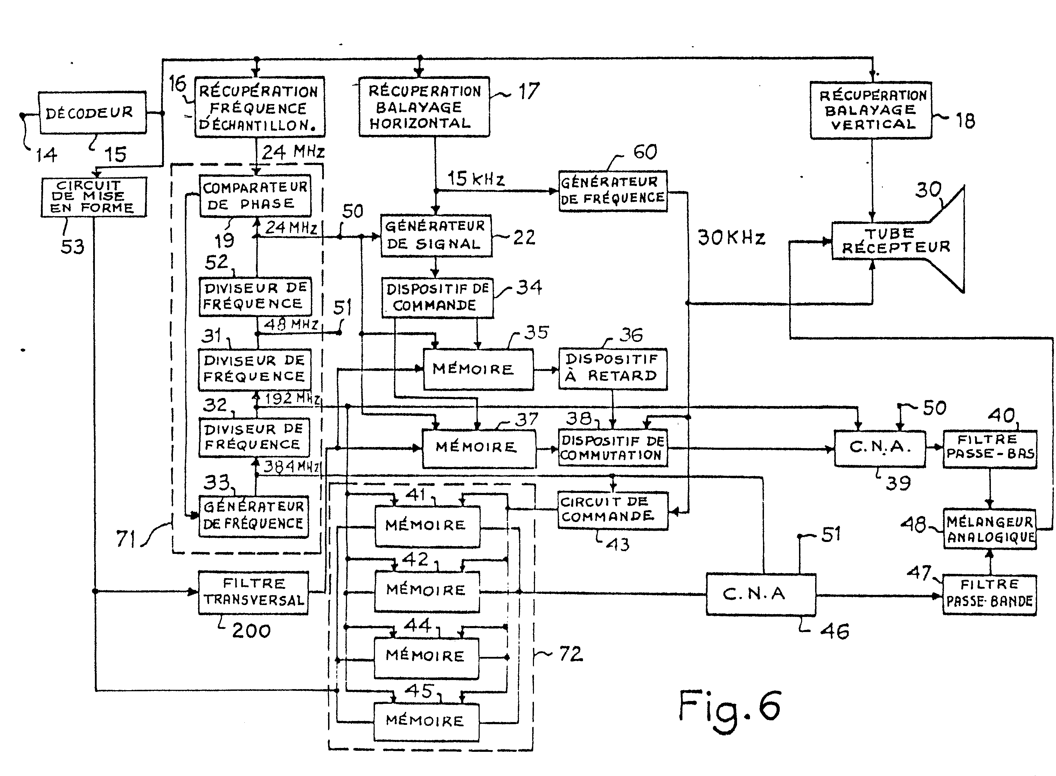

La figure 6 représente le schéma synoptique d'un exemple de réalisation d'un dispositif de restitution de vues mettant en oeuvre un tel balayage. Ce schéma synoptique est analogue à celui décrit dans la demande de brevet sus-dite. Sur cette figure, une borne 14, recevant un train de données binaires constitué d'informations de luminance transmises sous forme codée, est reliée à l'entrée d'un décodeur 15. La sortie du décodeur 15 est reliée à l'entrée d'un circuit de mise en forme 53 qui met les valeurs de luminance dans un format série où chaque valeur est représentée par 8 bits, à l'entrée d'un dispositif 16 de récupération de la fréquence d'échantillonnage 24 MHz, à l'entrée d'un dispositif 17 de récupération du signal de balayage horizontal d'analyse et à l'entrée d'un dispositif 18 de récupération du signal de balayage vertical. La sortie du dispositif 16 est reliée à une entrée d'un générateur de signaux d'horloge 71. La sortie du dispositif 17 est reliée d'une part à une première entrée d'un générateur de signal 22 et à une entrée d'un générateur de fréquence 60. La sortie du dispositif 18 est reliée à une entrée de commande de balayage vertical d'un tube récepteur 30.

Le générateur de signaux d'horloge 71 est constitué d'un comparateur de phase 19, d'un diviseur de fréquence par deux 52, d'un diviseur de fréquence par quatre 31, d'un diviseur de fréquence par deux 32, et d'un générateur de fréquence 33. L'entrée du générateur de signaux d'horloge 71 est reliée à une première entrée du comparateur de phase 19, dont une sortie est reliée à une entrée de commande du générateur de fréquence 33. La sortie du générateur de fréquence 33 fournit un signal de fréquence 384 MHz asservi par le comparateur de phase 19 au signal fourni par le dispositif de récupération de la fréquence d'échantillonnage 16. Le signal fourni par le générateur de fréquence 33 est fourni d'une part à une première sortie du générateur de signaux d'horloge 71 et d'autre part à l'entrée du diviseur de fréquence 32. La sortie de celui-ci fournit un signal de fréquence 192 MHz d'une part à une deuxième sortie du générateur de signaux d'horloge 71 et d'autre part à l'entrée du diviseur de fréquence 31. La sortie du diviseur de fréquence 31 fournit un signal de fréquence 48 MHz d'une part et une troisième sortie du générateur de signaux d'horloge 71 constituée d'une borne de sortie 51 et d'autre part à l'entrée du diviseur de fréquence 52. La sortie du diviseur de fréquence 52 fournit un signal de fréquence 24 MHz d'une part à une quatrième sortie du générateur de signaux d'horloge 71 constituée d'une borne de sortie 50 et d'autre part à une deuxième entrée du comparateur de phase 19, pour asservir sa phase à celle du signal de fréquence 24 MHz fourni par le dispositif 16.

Le générateur de fréquence 60 fournit un signal de balayage horizontal de restitution, de fréquence $2F_L = 30$ KHz, synchronisé par un signal de fréquence 15 KHz fourni par le dispositif 17 de récupération du signal de balayage horizontal d'analyse. Le dispositif 18 de récupération du signal de balayage vertical fournit au tube récepteur 30 un signal de commande de déviation verticale de fréquence 50 Hz et synchrone avec le balayage vertical d'analyse.

Le circuit de mise en forme 53 possède une sortie fournissant une suite de mots binaires de 8 bits constituée des valeurs du signal vidéo. Cette sortie est reliée à une entrée d'un filtre transversal 200, et à une entrée de données de moyens de mémorisation 72. La sortie du filtre transversal 200 est reliée à une entrée de données d'une mémoire 35 et à une entrée de données d'une mémoire 37. Les mémoires 35 et 37 sont des mémoires à accès aléatoire possédant chacune une entrée de validation reliée à la quatrième sortie du générateur de signaux d'horloge, et une entrée multiple de commande de lecture-écriture et d'adressage reliée respectivement à une première et une deuxième sortie d'un dispositif de commande 34 synchronisé par un signal fourni par le générateur de signaux 22. Les sorties des mémoires 35 et 37 sont reliées respectivement à l'entrée d'un dispositif à retard 36 et à une première entrée d'un dispositif de commutation 38, dont une deuxième entrée est reliée à la sortie du dispositif à retard 36 et dont la sortie est reliée à une entrée d'un convertisseur numérique-analogique 39.

Le dispositif de commutation 38 possède une entrée de commande reliée à la sortie du générateur de fréquence 60. Le convertisseur numérique-analogique 39 possède une première et une deuxième entrée de synchronisation reliées respectivement à la deuxième et à la quatrième sortie du générateur de signaux d'horloge, et une sortie reliée à l'entrée d'un filtre passe-bas 40. Les mémoires 35 et 37, le dispositif de commutation 38, le dispositif de commande 34, le filtre transversal 200, le convertisseur numérique-analogique 39, et le filtre passe-bas 40 constituent une première voie de traitement du signal vidéo fournissant la partie basse fréquence du signal vidéo appliqué au tube récepteur 30.

Les moyens de mémorisation 72 sont constitués de quatre mémoires 41, 42, 44 et 45, qui sont des registres à décalage stockant sous forme série les valeurs du signal vidéo reçu. Leurs entrées de données série sont reliées en parallèle à l'entrée de données des moyens de mémorisation 72. Ceux-ci possèdent une entrée d'horloge reliée d'une part à la deuxième sortie du générateur de signaux d'horloge 71, et reliée d'autre part à chacune des entrées d'horloge des mémoires 41, 42, 44 et 45. Ils possèdent une sortie reliée à chacune des sorties de données série des mémoires 41, 42, 44 et 45, et une entrée multiple de commande reliée d'une part à chacune des entrées de validation des mémoires 41, 42, 44 et 45, et d'autre part à la sortie d'un circuit de commande 43. Le circuit de commande 43 possède une première entrée de synchronisation reliée à la première sortie du générateur de signaux d'horloge 71 et une deuxième entrée de synchronisation reliée à la sortie du générateur de fréquence 60. La sortie des moyens de mémorisation 72 est reliée à une entrée de données d'un convertisseur numérique-analogique 46 possédant une première et une deuxième entrée de synchronisation reliées respectivement à la première et à la troisième sortie du générateur de signaux d'horloge 71, et une sortie reliée à l'entrée d'un filtre passe-bande 47. Les moyens de mémorisation 72, le circuit de commande 43, le convertisseur numérique-analogique 46 et le filtre passe-bande 47 constituent une deuxième voie de traitement fournissant la partie haute fréquence du signal vidéo appliqué au tube récepteur 30. Un mélangeur analogique 48 possédant une première entrée reliée à la sortie du filtre passe-bas 40, une deuxième entrée reliée à la sortie du filtre passe-bande 47 et une sortie reliée à une entrée de commande d'intensité lumineuse du tube récepteur 30.

Le fonctionnement de la première voie de traitement consiste à stocker les valeurs du signal vidéo, constituées d'une suite de 8 bits, alternativement dans la mémoire 35 et dans la mémoire 37 à la fréquence d'échantillonnage 24 MHz. Ainsi une valeur sur deux est stockée à la fréquence de 12 MHz dans la mémoire 37 pour fournir la partie basse fréquence du signal vidéo permettant de restituer une première ligne, et les autres valeurs sont stockées à la fréquence de 12 MHz dans la mémoire 35 pour fournir la partie basse fréquence du signal vidéo permettant de restituer une deuxième ligne. L'écriture de ces valeurs dure 64 microsecondes, comme l'analyse d'une ligne. Leur lecture est faite simultanément à la fréquence de 24 MHz dans les mémoires 35 et 37, elle commence 32 microsecondes après le début de l'écriture et dure 32 microsecondes. Les valeurs lues dans la mémoire 35 sont retardées de 32 microsecondes par le dispositif à retard 36. Ainsi l'ensemble des valeurs du signal vidéo d'une ligne d'analyse est stocké et restitué en 64 microsecondes. Par exemple la mémoire 37 stocke les valeurs correspondant aux points 81, 83, et 85 de la ligne de restitution $100_a$, et la mémoire 35 stocke les valeurs du signal vidéo des points 80, 82, 84, et 86 de la ligne de restitution $100_b$. La lecture de ces valeurs est réalisée simultanément dans les deux mémoires 35 et 37, et sans attendre la fin de l'écriture d'une ligne complète. Cette lecture commence 32 microsecondes après l'écriture de la première valeur du signal vidéo de la ligne considérée, et elle finit peu après l'écriture de la dernière valeur. Les deux mémoires 35 et 37 étant lues simultanément et le dispositif à retard 36 procurant un retard de 32 microsecondes équivalent à la durée d'une ligne de restitution, les valeurs du signal vidéo lues dans la mémoire 35 permettent de restituer la ligne de restitution $100_b$ après la fin de la restitution de la ligne $100_a$. Le dispositif de commutation 38 transmet d'abord les valeurs fournies par la mémoire 37 puis les valeurs fournies par le dispositif 36, à la cadence de 30 KHz du balayage horizontal de restitution.

Dans le dispositif de commande 34 un premier compteur fournit une suite de valeurs d'adresse d'écriture à une cadence de 12 MHz synchronisée par le signal fourni par la quatrième sortie du générateur de signaux d'horloge 71. Chaque valeur d'adresse d'écriture est fournie d'abord à la mémoire 37 puis ensuite à la mémoire 35. La remise à zéro de ce premier compteur est assurée par un signal de fréquence 15 KHz fourni par la sortie du dispositif 17 de récupération de la fréquence du balayage horizontal d'analyse. Un signal de commande d'écriture est fourni par le dispositif 34 en même temps que chaque valeur d'adresse d'écriture.

Dans le dispositif de commande 34 un deuxième compteur fournit une suite de valeurs d'adresse de lecture identique à la suite de valeurs d'adresses d'écriture, mais avec un retard de 32 microsecondes et à une cadence de 24 MHz synchronisée par le signal fourni par la quatrième sortie du générateur de signaux d'horloge 71. Chaque valeur d'adresse de lecture est fournie simultanément aux deux mémoires 35 et 37. La remise à zéro de ce deuxième compteur est assurée par le signal de fréquence 15 KHz fourni par la sortie du dispositif 17 et retardé de 32 microsecondes. Un signal de commande de lecture est fourni aux deux mémoires 35 et 37 par le dispositif 34 en même temps que chaque valeur d'adresse de lecture. Ces deux mémoires 35 et 37 étant à accès aléatoire les lectures à la fréquence de 24 MHz peuvent être aisément imbriquées avec les écritures à la fréquence de 12 MHz.

Le fait de prélever une valeur sur deux du signal vidéo afin de restituer deux lignes à partir d'une ligne d'analyse constitue en fait un sous-échantillonnage qui génère des fréquences parasites ("aliasing" en littérature anglo-saxonne). L'apparition de ces fréquences parasites peut être facilement prévenue par un filtrage numérique spatial du type transversal qui combine linéairement des valeurs successives du signal. Un tel filtrage est réalisé par le filtre 200, situé en amont des mémoires 35 et 37.

La deuxième voie de traitement détermine la partie haute fréquence du signal vidéo permettant de restituer deux lignes de durée 32 microsecondes à partir des valeurs du signal vidéo d'une ligne analysée en 64 microsecondes par le balayage ondulatoire. Les valeurs du signal vidéo, sous la forme série, sont inscrites bit par bit simultanément dans deux mémoires, par exemple les mémoires 41 et 42, à la fréquence 192 MHz du signal fourni par la deuxième sortie du générateur de signaux d'horloge 71. Quand les valeurs vidéo de toute une ligne d'analyse ont été stockée dans

ces deux mémoires le circuit de commande 43 commande une lecture à la fréquence 384 MHz dans la première mémoire, 41, pendant une durée de 32 microsecondes, puis une lecture à la fréquence 384 MHz dans la deuxième mémoire, 42, pendant une durée de 32 microsecondes. Ainsi les valeurs du signal vidéo de la ligne d'analyse sont lues deux fois à une fréquence deux fois plus grande que la fréquence d'échantillonnage. Pendant que les mémoires 41 et 42 réalisent l'écriture des valeurs pour une ligne d'analyse, les mémoires 44 et 45 successivement réalisent la lecture des valeurs pour deux lignes de restitution. Puis les rôles s'inversent, les mémoires 44 et 45 réalisent simultanément l'écriture des valeurs pour la ligne d'analyse suivante pendant que les mémoires 41 et 42 réalisent les lectures successives des valeurs pour les deux lignes de restitution suivantes. Par exemple les valeurs du signal vidéo correspondant aux points 80, 81, 82, 83, 84, 85, 86 sont écrites simultanément dans les mémoires 41 et 42 puis sont lues deux fois, dans l'ordre 80, 81, 82, 83, 84, 85, 86, 80, 81, 82, 83, 84, 85, 86, pour fournir la partie haute fréquence du signal vidéo permettant de restituer les points 90, 81, 92, 83, 94, 85, 96, et 80, 91, 82, 93, 84, 95, 86.

La partie haute fréquence et la partie basse fréquence du signal vidéo de restitution sont sélectionnées respectivement par le filtre passe-bande 47 et le filtre passe-bas 40 et sont additionnées par le mélangeur analogique 48.

La réalisation d'un dispositif 18 de récupération du balayage vertical pour fournir un signal dont le graphe temporel est conforme à la figure 4 est à la portée de l'homme de l'art, d'autre part il est possible de réaliser un balayage analogue en utilisant un signal de déviation verticale constitué d'un premier signal proportionnel au temps et d'un deuxième signal périodique triangulaire au lieu d'être impulsionnel.

Il est à la portée de l'homme de l'art de réaliser différemment les mémoires 35 et 37, par exemple en les remplaçant par deux registres à décalage ayant chacun une capacité correspondant à une ligne d'analyse et des aiguillages, une suite de lectures étant effectuée dans un des registres pendant qu'une suite d'écritures est effectuée dans l'autre registre à une vitesse deux fois plus lente. Parmi les valeurs lues, une sur deux est transmise et la valeur restante est ré-inscrite à l'entrée du registre à décalage en cours de lecture afin qu'elle puisse être lue pour la restitution de la ligne suivante.

Il est aussi à la portée de l'homme de l'art de réaliser différemment les moyens de mémorisation 72, par exemple en réalisant un stockage des valeurs sous la forme de huit bits en parallèle, ou bien en n'utilisant que deux registres à décalage ayant chacun une capacité correspondant à une ligne d'analyse. Dans ce cas les registres sont alternativement lus et inscrits à la fréquence de 30 KHz, celui qui est lu est rebouclé par l'intermédiaire d'un aiguillage de façon à réinscrire par son entrée série les valeurs fournies sur sa sortie série afin de permettre ensuite une deuxième lecture de ces valeurs pour restituer une deuxième ligne à partir de la même ligne d'analyse.

La perception des images peut être encore améliorée avec un autre type de balayage réalisant un changement des trames. Classiquement chaque image est analysée en deux trames. Si la séquence d'images représente le déplacement vertical d'un objet, chaque trame représente deux positions légèrement différentes de cet objet, ce qui provoque un sautillement de l'image restituée dans toute zone où elle représente un contour horizontal de l'objet en déplacement. Dans le cas où chaque trame de l'image restituée est constituée de couples de lignes le sautillement perturbe quatre lignes de restitution, donc l'oeil perçoit un sautillement identique à celui qu'il perçoit avec un balayage classique comportant deux fois moins de lignes. Pour atténuer ce phénomène un procédé consiste à restituer les couples de lignes en intégrant la première ligne de chaque couple à une première trame et la seconde ligne à une seconde trame. Par exemple, sur la figure 3, les points (90, 81, 92, ...) des lignes $100_a$ , $101_a$ , $102_a$ , $103_a$ , ... , sont balayés au cours d'une première trame, les points (80, 91, 82, ...) des lignes $100_a$ , $101_b$ , $102_b$ , $103_b$ , ... , sont balayés au cours d'une deuxième trame. Sur cette figure les points de la première trame sont représentés par des petits carrés blancs et les points de la deuxième trame sont représentés par des petits carrés noirs.

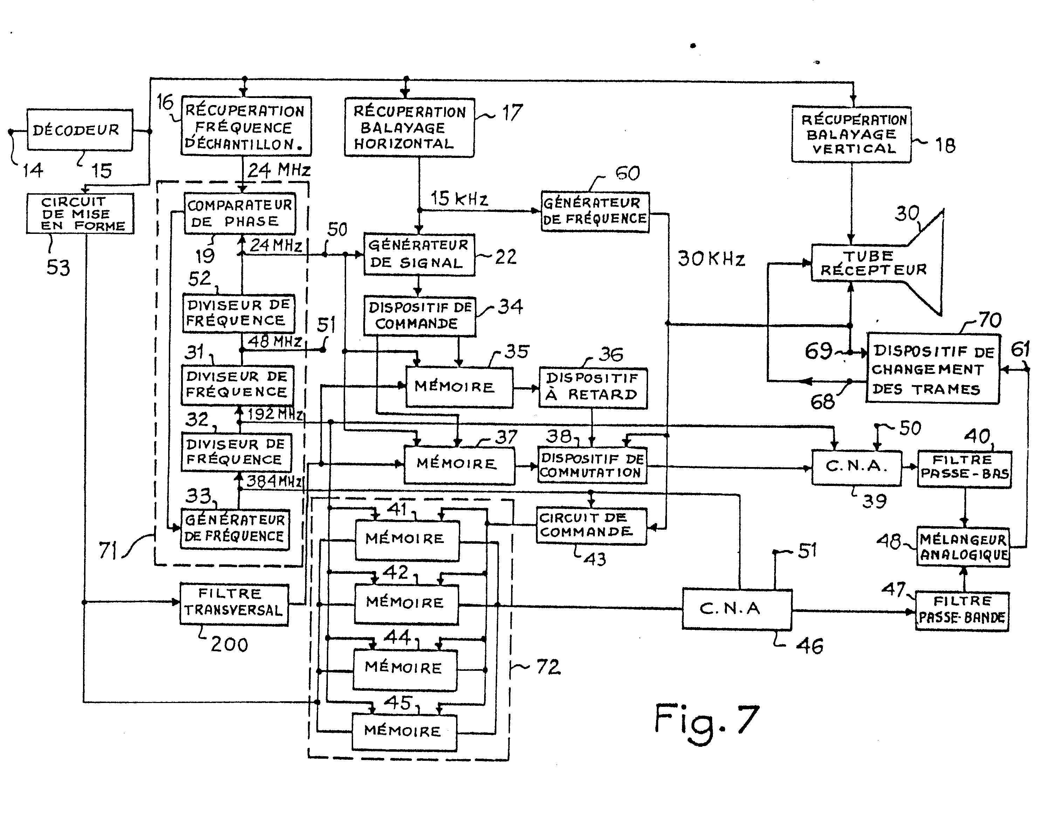

La figure 7 représente le schéma synoptique d'un deuxième exemple de réalisation d'un dispositif de restitution de vues mettant en oeuvre ce procédé de changement de trames. Ce schéma synoptique est analogue à celui de la figure 6 mais il comporte en plus un dispositif de changement de trames 70. D'autre part, le dispositif 18 de récupération du signal de balayage vertical est différent car il génère un balayage proportionnel au temps. La sortie du mélangeur analogique 48 n'est pas reliée directement à l'entrée de commande de l'intensité lumineuse du tube récepteur 30. Le dispositif 70 de changement des trames possède une borne d'entrée 61 reliée à la sortie du mélangeur 48, une borne de sortie 68 reliée à l'entrée de commande de l'intensité lumineuse du tube récepteur 30, et une borne d'entrée de synchronisation 69 reliée à la sortie du générateur de fréquences 60.

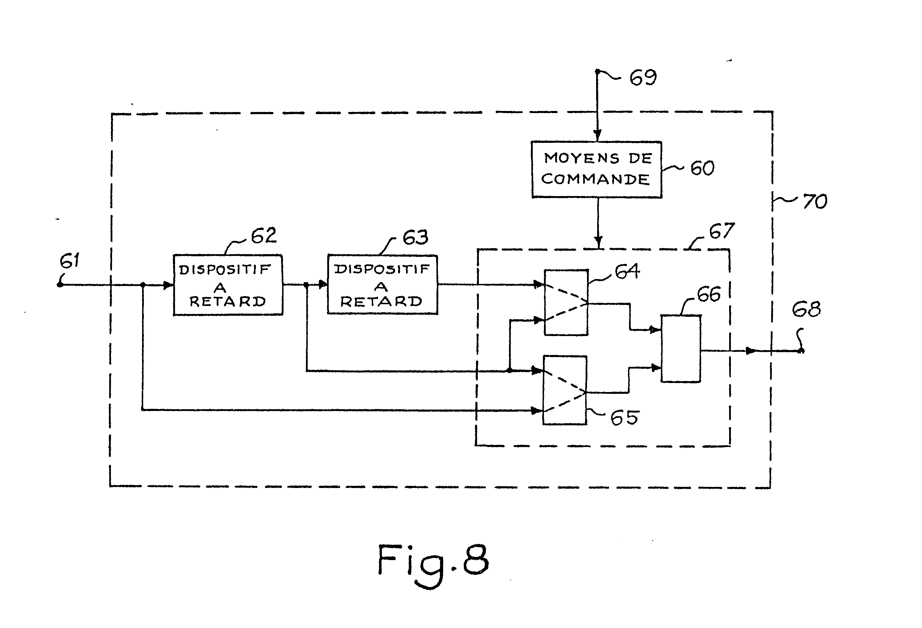

La figure 8 représente le schéma synoptique d'un exemple de réalisation d'un dispositif 70 de changement de trames, permettant de réaliser une restitution d'images où chacune des lignes d'une paire de lignes de restitution est restituée dans deux trames différentes. Le dispositif 70 comporte deux bornes d'entrées 61 et 69, une borne de sortie 68, deux dispositifs à retard analogiques 62 et 63, un circuit de multiplexage analogique 67 et des moyens de commande 69. Les dispositifs à retard 62 et 63 procurent chacun un retard équivalent à une trame moins une ligne de restitution. Ils sont montés en série, l'entrée du dispositif à retard 62 est reliée à la borne d'entrée 61 et à une première entrée du circuit de multiplexage 67, la sortie du dispositif à retard 62 est reliée à l'entrée du dispositif à retard 63 et à une deuxième entrée du circuit de multiplexage 67, et la sortie du dispositif à retard 63 est reliée à une troisième entrée du circuit de multiplexage 67. Le circuit de multiplexage 67 possède une sortie reliée à la borne de sortie 68 du dispositif 70. Le circuit de multiplexage 67 est constitué de trois aiguillages logiques à deux entrées et une sortie, équivalent chacun à un commutateur ayant deux positions, la première entrée étant reliée à la sortie dans la première position et la deuxième entrée étant reliée à la sortie dans la deuxième position. Les valeurs du signal vidéo de restitution sont stockées sous la forme de mots de 8 bits en format série et sont décalées au rythme d'un signal d'horloge de fréquence 384 MHz. Les aiguillages 64, 65 et 66 sont commandés par des moyens de commande 69 pour réaliser la séquence d'opérations suivantes : pendant la durée de la première trame de restitution l'aiguillage 66 relie la sortie de l'aiguillage 65 à la borne de sortie 68, l'aiguillage 65 transmet alternativement les valeurs non retardées du signal vidéo et les valeurs retardées d'un retard équivalent à une trame moins une ligne de restitution, à la fréquence du balayage de restitution (30 KHz).

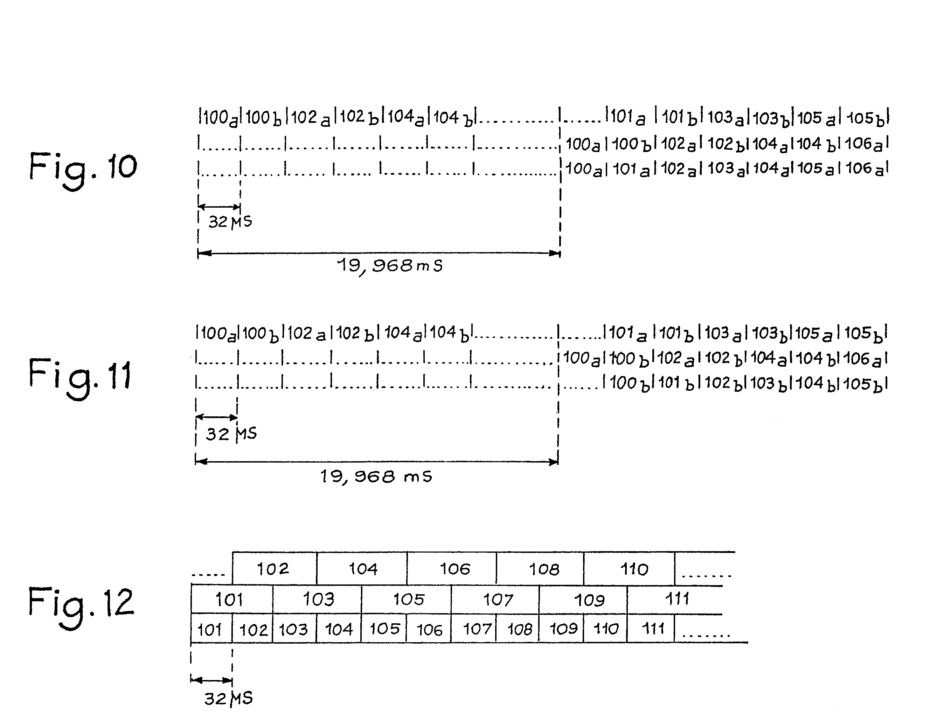

Le tableau de la figure 10 représente l'ordre des lignes correspondant respectivement aux valeurs du signal vidéo fournies à la borne d'entrée 61, à celles retardées par le dispositif 62, et à celles transmises par les aiguillages 65 et 66 pendant la première trame de restitution. Cet ordre de restitution des lignes correspond à la première trame de restitution représentée sur la figure 3 par des carrés blancs.

Pendant la durée de la deuxième trame de l'image restituée l'aiguillage 66 relie la sortie de l'aiguillage 64 à la borne de sortie 68. L'aiguillage 64 transmet alternativement les valeurs du signal vidéo fournies par la sortie du dispositif à retard 62 et celles fournies par la sortie du dispositif à retard 63, à la fréquence du balayage horizontal de restitution (30 KHz). Le tableau de la figure 11 représente l'ordre des lignes corespondant respectivement aux valeurs du signal vidéo fournies à l'entrée du dispositif 63, à celles restituées sur la sortie de ce dispositif 63 et à celles transmises par les aiguillages 64 et 66 pendant la deuxième trame de restitution. Cet ordre de restitution correspond à la deuxième trame de restitution représentée sur la figure 3 par des carrés noirs.

Le retard correspondant à une trame moins une ligne de restitution est égal à 19,968 millisecondes dans cet exemple. La première valeur du signal vidéo de la première trame de restitution (ligne $100_a$) est retardée de 19,968 millisecondes par rapport au début de l'analyse de l'image, alors que la première valeur du signal vidéo de la deuxième trame de restitution (ligne $100_b$) est retardée de deux fois cette durée plus la durée d'une ligne, soit :

19,968 + 19,968 + 0,032 = 39,968 millisecondes.

Ces retards ne provoquent pas de temps mort entre les restitutions de deux lignes successives, car pendant la restitution de la deuxième trame d'une image les valeurs du signal vidéo de la première trame de l'image suivante sont en cours de stockage dans le dispositif à retard 62.

Un autre mode de réalisation de ce dispositif additionnel 70 consiste à utiliser des registres à décalage numériques stockant et décalant les valeurs du signal vidéo sous forme série ou parallèle. Par

exemple, si chaque valeur est représentée par une série de huit bits, les deux registres à décalage utilisés sont commandés par un signal d'horloge de fréquence 384 MHz. Dans ce mode de réalisation le dispositif additionnel est inséré en aval du mélangeur réalisant l'addition de la partie basse fréquence et de la partie haute fréquence du signal vidéo de l'image restituée, le mélangeur utilisé alors est un mélangeur numérique situé en amont de la conversion numérique-analogique du signal vidéo. Les convertisseurs numériques-analogiques 39 et 46 sont alors supprimés, les filtres 40 et 47 sont des filtres numériques, le mélangeur 48 est un mélangeur numérique et le dispositif 70 de changement des trames n'est plus relié directement à une entrée de commande du tube récepteur 30, mais par l'intermédiaire d'un convertisseur numérique-analogique.

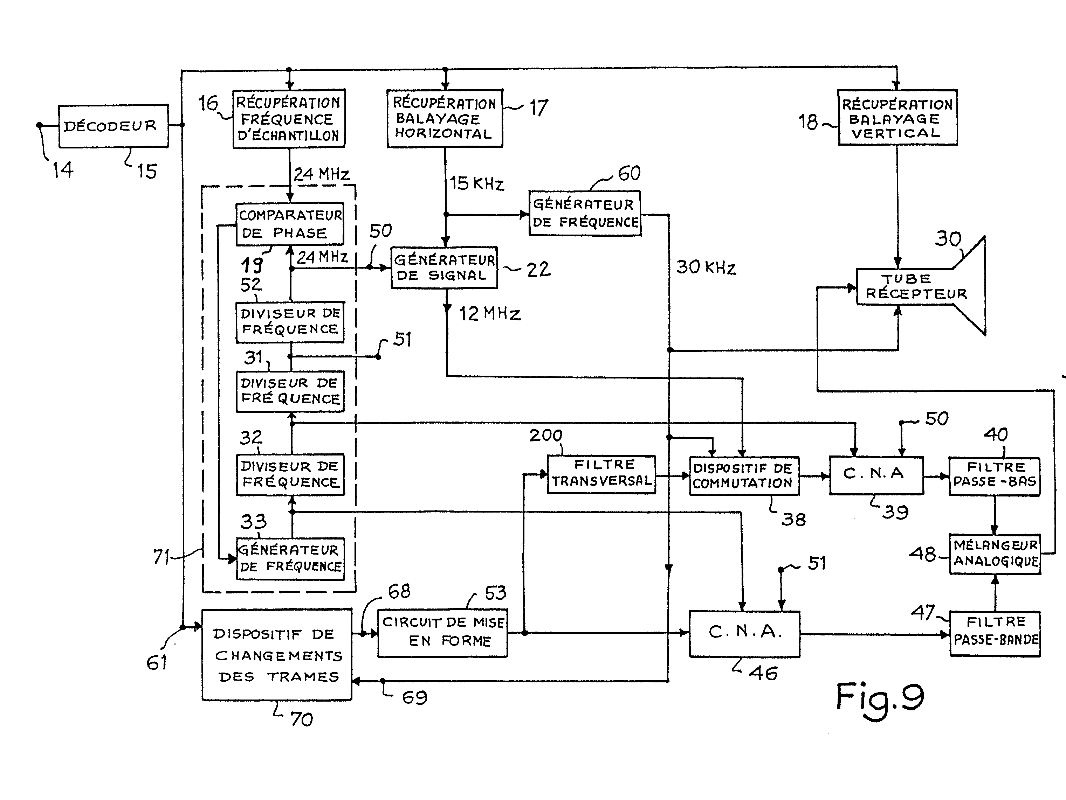

La figure 9 représente le schéma synoptique d'un second exemple de réalisation du dispositif de restitution de vues où un changement de trames est réalisé. Ce schéma est très semblable à celui de la figure 6, les moyens identiques portent les mêmes références numériques. Un dispositif de changement de trame 70 est intercalé entre la sortie du décodeur 15 et l'entrée du circuit de mise en forme 53. Il est relié à la sortie du décodeur 15 par une borne d'entrée 61, et à l'entrée du circuit de mise en forme 53 par une borne de sortie 68. Il possède une borne d'entrée de synchronisation 69 reliée à la sortie du générateur de fréquences 60 qui lui fournit un signal dont la fréquence, 30 KHz, est celle du balayage horizontal de l'image restituée. Les mémoires 35 et 37, 41, 42, 44, 45, le dispositif de commande 34, le circuit de commande 43 et le dispositif à retard 36 sont supprimés. Le dispositif de commutation 38 possède une entrée reliée à la sortie du filtre transversal 200, une première entrée de commande reliée à la sortie du générateur de signal 22 et une deuxième entrée de commande reliée à la sortie du générateur de fréquence 60. L'entrée de données du convertisseur numérique-analogique 46 est reliée directement à la sortie du circuit de mise en forme 53. L'entrée de commande d'intensité lumineuse du tube récepteur 30 est reliée directement à la sortie du mélangeur 48.

Dans cette variante de réalisation, le dispositif de changement des trames 70 a un schéma synoptique identique à celui représenté sur la figure 5, mais il diffère dans ses détails de réalisation et de fonctionnement. Les dispositifs à retard 62 et 63 sont constitués par des registres à décalage numériques ayant chacun une capacité correspondant à une trame moins une ligne de restitution. Les valeurs du signal vidéo reçu sont sous forme série, elles sont stockées et décalées dans ces registres sous l'action d'un signal d'horloge de fréquence 294 MHz. Les moyens de commande 69 commandent les aiguillages 64, 65 et 66. Par exemple, pendant la durée d'une première trame restituant la portion d'image représentée sur la figure 3 l'aiguillage 66 relie la sortie de l'aiguillage 65 à la borne de sortie 68, et l'aiguillage 65 transmet alternativement les valeurs du signal vidéo présentes à l'entrée du dispositif à retard 62 et celles présentes sur sa sortie, à la cadence du balayage horizontal de restitution (30 KHz). Le tableau de la figure 12 représente l'ordre des lignes correspondant respectivement aux valeurs du signal vidéo fournies à l'entrée du dispositif 62, à celles restituées par le dispositif 62 sur sa sortie, et à celles transmises par les aiguillages 65 et 66 pendant la durée de la première trame de restitution.

Pendant la durée de la deuxième trame de l'image restituée l'aiguillage 66 relie la sortie de l'aiguillage 64 à la borne de sortie 68, et la sortie de l'aiguillage 64 fournit une suite identique à celle que la sortie de l'aiguillage 65 a fourni précédemment, mais avec un retard correspondant à une trame moins une ligne de l'image restituée.

Ainsi le circuit de mise en forme 53 et les deux voies de traitement, haute fréquence et basse fréquence, reçoivent successivement deux suites identiques de valeurs. Les traitements de ces deux suites sont différents dans la voie basse fréquence pour permettre de déterminer les valeurs de luminance des deux lignes restituées pour chaque ligne analysée. Pendant la durée de la première trame de l'image restituée le dispositif de commutation 38 transmet une valeur sur deux de la suite, les valeurs de rang impair, et pendant la durée de la deuxième trame de l'image restituée il transmet les valeurs de rang pair. Par contre dans la voie de traitement de la partie haute fréquence du signal vidéo chaque valeur des deux suites est traitée sans distinction, il n'y a donc pas de circuit de commutation ni de mémoire.

Il est à la portée de l'homme de l'art de réaliser différemment les

17

dispositifs à retard 62 et 63, notamment en mettant les valeurs du signal vidéo sous forme parallèle.

En pratique la première et la dernière ligne de l'analyse d'une image sont constituées d'une demi-ligne noire et d'une demi-ligne d'image. Leur traitement est analogue à celui exposé ci-dessus pour des lignes entières. Elles sont considérées comme des lignes entières comportant un signal au niveau du noir pendant la moitié de leur durée.

La restitution des images peut être encore améliorée en réalisant une analyse en une seule trame, dite "progressive scanning" en littérature anglo-saxonne. Dans ce cas, d'une part le tube de prise de vue fonctionne mieux parce qu'il n'y a pas de migration de charges entre les zones de la cible balayée pendant la première trame et les zones balayées pendant la deuxième trame, d'autre part le balayage en une seule trame évite le phénomène de sautillement des contours horizontaux d'un objet qui se déplace verticalement dans l'image. Pour maintenir la compatibilité du système de télévision à haute définition avec les dispositifs de restitution de vues classiques, à balayage de deux trames entrelacées, il suffit de simuler l'entrelacement de l'analyse, avant la transmission du signal vidéo, par un dispositif comportant une mémoire d'image et un multiplexeur. Le dispositif de restitution de vues à haute définition destiné à recevoir un tel signal vidéo peut être strictement identique à ceux décrits ci-dessus puisque l'ordre de transmission des lignes est le même que si ces lignes avaient été analysées par un balayage en deux trames.

REVENDICATIONS

1. Système de télévision à haute définition comprenant, à l'émission, un dispositif de prise de vues comportant : un tube analyseur (11) ayant une sortie fournissant un signal vidéofréquence, et un premier générateur de signaux (6 à 10) pour générer des signaux de balayage 1H et V nécessaires au fonctionnement du tube analyseur (1), ces signaux 1H et V engendrant une analyse "ondulatoire" ayant pour fréquence ligne $F_L$ et pour fréquence d'ondulation F, et à la réception, un dispositif de restitution de vue comportant : une entrée de signal (14), un tube récepteur (30) recevant un signal de commande, un deuxième générateur de signaux (17, 18 et 60) pour générer des signaux de balayage 2H et V engendrant une restitution "linéaire" ayant pour fréquence ligne $2F_L$, chaque ligne analysée étant restituée sous la forme de deux lignes qui sont immédiatement voisines dans l'image restituée, une première voie de traitement (35 à 40 et 200) ayant une entrée couplée à l'entrée (14) du dispositif de restitution de vue et une sortie pour fournir un premier signal correspondant à la partie basse du spectre du signal de commande du tube récepteur (30), une deuxième voie de traitement (41 à 47) ayant une entrée couplée à l'entrée du dispositif de restitution de vue et une sortie pour fournir un deuxième signal correspondant à la partie haute du spectre du signal de commande du tube récepteur (30), et un mélangeur (48) ayant une première et une seconde entrée respectivement couplées à la sortie de la première voie de traitement (35 à 40 et 200) et à la sortie de la deuxième voie de traitement (41 à 47), et une sortie couplée à une entrée du tube récepteur (30), système caractérisé en ce que le deuxième générateur de signaux (17, 18 et 60) génère des signaux de balayage tels que chaque image analysée est restituée en deux trames entrelacées, et tels que chaque ligne analysée est restituée sous la forme de deux lignes qui sont immédiatement voisines dans l'image restituée.

2. Système de télévision à haute définition, selon la revendication 1, caractérisé en ce que le premier générateur de signaux (6 à 10) génère un signal de balayage vertical V analysant chaque image en deux trames entrelacées.

3. Système de télévision à haute résolution, selon la revendication 1, caractérisé en ce que le premier générateur de signaux (6 à 10) génère un signal de balayage vertical V analysant chaque image en une seule trame, et en ce que le dispositif de prise de vues comporte en outre des moyens pour transmettre le signal vidéo de chaque ligne alternativement sans retard et avec un retard équivalent à une demi-image, afin de permettre la restitution de l'image par un récepteur à balayage classique balayant deux trames par image.

4. Système de télévision à haute résolution, selon la revendication 1, où le deuxième générateur de signaux (17, 18 et 60) génère un signal de balayage vertical tel que, pour chaque couple de lignes restituées, les deux lignes appartiennent à une même trame de l'image restituée.

5. Système de télévision à haute définition selon la revendication 4, où le dispositif de restitution de vues comporte un deuxième générateur de signaux (17, 18 et 60) générant un signal de balayage vertical constitué de la somme d'un signal provoquant une déviation verticale proportionnelle au temps et d'un signal périodique, de fréquence égale à $F_L$ , provoquant une déviation verticale correspondant à la largeur d'une ligne pendant toute la durée d'une ligne sur deux de chaque trame de l'image restituée.

6. Système de télévision à haute définition, selon l'une quelconque des revendications 1 à 3, où le second générateur de signaux (17, 18 et 60) génère un signal de balayage vertical tel que pour chaque couple de lignes restituées, l'une appartient à une trame restituée et l'autre appartient à la trame suivante, quelle que soit la trame d'analyse à laquelle appartient la ligne analysée si l'analyse est faite en deux trames.

7. Système de télévision selon la revendication 6, où le dispositif de restitution de vues comporte en outre un dispositif (70) de changement de trames ayant une entrée couplée à la sortie du mélangeur (48) et une sortie couplée à l'entrée du tube récepteur (30), pour transmettre le signal de commande de ce tube pendant la durée de la première trame de l'image restituée, alternativement avec un retard équivalent à une trame moins une ligne de restitution et sans retard, à la fréquence $2F_L$ du balayage ligne de restitution, et pendant la durée de la seconde trame de l'image restituée alternativement avec un retard équivalent à une trame moins une ligne de restitution et un retard équivalent à deux trames moins deux lignes de restitution, à la fréquence $2F_L$ du balayage ligne de restitution.

8. Système de télévision selon la revendication 6, où le dispositif de restitution de vues comporte en outre un dispositif (70) de changement de trames ayant une entrée couplée à l'entrée du dispositif de restitution de vue et une sortie couplée à l'entrée des deux voies de traitement pour transmettre le signal vidéo pendant la durée de la première trame de l'image restituée, alternativement avec un retard équivalent à une trame moins une ligne de restitution et sans retard, à la fréquence $2F_L$ du balayage ligne de restitution, et pendant la durée de la deuxième trame de l'image restituée, alternativement avec un retard équivalent à une trame moins une ligne de restitution et un retard équivalent à deux trames moins deux lignes de restitution, à la fréquence $2F_L$ du balayage ligne de restitution.

0098197

1/7

Fig.1

Fig.2

Fig.3

Fig.4

16MS

32MS

32MS

Fig.5

Fig.6

3/7

0098197

Fig. 7

Fig.8

Fig.9

6/7

0098197

Fig. 10

| 100a | 100b | 102a | 102b | 104a | 104b | ............ | ...... | 101a | 101b | 103a | 103b | 105a | 105b |
| | | | | | | | 100a | 100b | 102a | 102b | 104a | 104b | 106a |
| | | | | | | | 100a | 101a | 102a | 103a | 104a | 105a | 106a |

32 MS

19,968 mS

Fig. 11

| 100a | 100b | 102a | 102b | 104a | 104b | ............ | ..... | 101a | 101b | 103a | 103b | 105a | 105b |
| | | | | | | | 100a | 100b | 102a | 102b | 104a | 104b | 106a |
| | | | | | | | 100b | 101b | 102b | 103b | 104b | 105b |

32 MS

19,968 mS

Fig. 12

| ..... | 102 | 104 | 106 | 108 | 110 | ....... |
| 101 | 103 | 105 | 107 | 109 | 111 |
| 101 | 102 | 103 | 104 | 105 | 106 | 107 | 108 | 109 | 110 | 111 | ....... |

32 MS

0098197

Office européen
des brevets

**RAPPORT DE RECHERCHE EUROPEENNE**

Numéro de la demande

EP 83 40 1225

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| Y | EP-A-0 043 298 (THOMSON-CSF) * Page 2, ligne 30 - page 4, ligne 30 * | 1,2,6 | H 04 N 3/30 H 04 N 5/02 H 04 N 7/00 |
| | --- | | |
| Y | NACHRICHTENTECHNISCHE ZEITSCHRIFT, vol. 30, no. 3, mars 1977, pages 223-225, Berlin, DE. J. OST: "Zeilennormwandler in einem Video-Kommunikationssystem" * Page 224, colonne de gauche, ligne 22 - colonne de droite, ligne 4; page 225, colonne de gauche, lignes 1-10; figures 2C,4 * | 1-3,6 | |
| | --- | | |
| Y | US-A-3 832 487 (DE NIET) * Colonne 1, ligne 1 - colonne 2, ligne 46; colonne 7, lignes 13-16 * | 6-8 | |
| | ----- | | DOMAINES TECHNIQUES RECHERCHES (Int. Cl. ³) H 04 N 3/00 H 04 N 5/00 |

Le présent rapport de recherche a été établi pour toutes les revendications

| Lieu de la recherche LA HAYE | Date d'achèvement de la recherche 28-09-1983 | Examinateur DE ROECK A.F.A. |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82